# EUROPÄISCHE PATENTSCHRIFT

(11) **EP 0 917 998 B1**
(45) Veröffentlichungstag und Bekanntmachung des Hinweises auf die Patenterteilung: **28.01.2004**
(21) Anmeldenummer: 98122111.2
(22) Anmeldetag: 23.11.1998
(51) Int. Cl.: B60R 22/34, B60R 22/36

(54) **Gurtaufroller zum Einbau in eine umlegbare Rückenlehne**
Seat belt retractor for fitting to the back of a folding seat
Enrouleur de ceinture de sécurité à monter dans le dossier rabattable d'un siège

(30) Priorität: 24.11.1997 DE 29720816 U
(43) Veröffentlichungstag der Anmeldung: 26.05.1999
(73) Patentinhaber: TRW Occupant Restraint Systems GmbH & Co. KG, 73551 Alfdorf (DE)
(72) Erfinder: Weller, Hermann-Karl, 73553 Alfdorf (DE)
(74) Vertreter: Degwert, Hartmut, Dipl.-Phys.

(56) Entgegenhaltungen:
- WO-A-98/49035
- DE-A- 2 927 159
- DE-A- 19 901 164
- DE-U- 29 720 817
- PATENT ABSTRACTS OF JAPAN vol. 017, no. 414 (M-1456), 3. August 1993 (1993-08-03) & JP 05 085304 A (MAZDA MOTOR CORP), 6. April 1993 (1993-04-06)

## Beschreibung

Die Erfindung betrifft einen Gurtaufroller zum Einbau in eine umlegbare Rückenlehne, die am Fahrzeugaufbau in aufrechter Gebrauchsposition durch ein Schloß verriegelbar ist, mit einer in einem Rahmen drehbar gelagerten Gurtspule und einem Blockiermechanismus zur selektiven drehfesten Blockierung der Gurtspule am Rahmen, wobei der Blockiermechanismus aktiviert ist, solange die Rückenlehne nicht durch Einrasten des Schlosses verriegelt ist.

Wenn der Gurtaufroller nicht direkt am Fahrzeugaufbau, sondern an einer Rückenlehne befestigt ist, werden die Gurtkräfte über die Rückenlehne und ihre Verankerung in den Fahrzeugaufbau eingeleitet. Eine umlegbare Rückenlehne muß am Fahrzeugaufbau verrastet sein, damit sie die Gurtkräfte aufnehmen und in den Fahrzeugaufbau weiterleiten kann. Die Verrastung einer umlegbaren Rückenlehne am Fahrzeugaufbau erfolgt mittels eines Schlosses, das bei Erreichen der aufrechten Gebrauchsposition der Rückenlehne automatisch einrastet. Bei einem nicht oder nicht vollständig eingerasteten Schloß kann der Sicherheitsgurt seine Rückhaltefunktion nicht erfüllen weshalb eine Aktivierung des Blockiermechanismus des Gurtaufrollers sinnvoll ist, solange die Rückenlehne nicht durch Einrasten des Schlosses verriegelt ist. Bei aktiviertem Blockiermechanismus kann kein Gurtband vom Gurtaufroller abgezogen werden. Der Sicherheitsgurt kann daher nicht angelegt werden, solange die Rückenlehne nicht am Fahrzeugaufbau verriegelt ist. Der Fall, daß der Sicherheitsgurt zwar angelegt ist, tatsächlich jedoch keine Rückhaltewirkung erzielt werden kann, weil die Rückenlehne nicht verriegelt ist, kann dann nicht auftreten.

Aus der JP 5085304 A und der DE 29 27 159 A sind Gurtaufoller der eingangs genannten Art bekannt, bei denen das Abwickeln des Gurtbandes von der Gurtspule verhindert wird, solange die Rückenlehne nicht verriegelt ist.

Die Erfindung schafft einen Gurtaufroller, mit dem ohne großen konstruktionellen Aufwand eine Blockierung der Gurtspule bei nicht eingerastetem Rückenlehnenschloß auf effektive Weise ermöglicht wird. Dies wird gemäß der Erfindung mit einem Gurtaufroller der eingangs genannten Art erreicht, der die kennzeichnenden Merkmale des Anspruchs 1 aufweist.

Der Blockiermechanismus des erfindungsgemäßen Gurtaufrollers weist eine Ansteuereinrichtung und ein dieser zugeordnetes Betätigungselement auf, das durch ein Schub- oder Zugmittel mit dem Schloß gekoppelt ist. Das Betätigungselement ist so mit dem Schloß gekoppelt, daß bei eingerastetem Schloß das Betätigungselement die Steuereinrichtung und damit den Blockiermechanismus nicht aktiviert, wohingegen bei nicht verrastetem Schloß das Betätigungselement die Aktivierung des Blockiermechanismus auslöst. Durch Verwendung einer Ansteuereinrichtung können die vom Betätigungselement aufzubringenden Kräfte niedrig gehalten werden. Schub- oder Zugmittel zwischen Schloß und Betätigungselement ermöglichen eine variable Positionierung des Gurtaufrollers in der Rückenlehne.

Der Blockiermechanismus enthält ferner eine an der Gurtspule angeordnete Sperrverzahnung, wenigstens eine in die Sperrverzahnung einsteuerbare Sperrklinke, einen Steuerhebel zur Einsteuerung der Sperrklinke in die Sperrverzahnung, eine mit der Gurtspule verbundene Kupplungsscheibe mit einer Verzahnung, eine auf dem Steuerhebel angeordnete Lehnenschloßklinke, die in die Verzahnung der Kupplungsscheibe einsteuerbar ist und einen Stößel, der mit dem Schloß durch einen Kabelzug gekoppelt ist und auf die Lehnenschloßklinke einwirkt. Die Anordnung einer Lehnenschloßklinke auf dem Steuerhebel und deren Betätigung durch einen Stößel ist insbesondere dann vorteilhaft, wenn bspw. eine direkte Kopplung der Sperrklinke mit dem Schloß aufgrund einer zu hohen Betätigungskraft und eine Aktivierung des Blockiermechanismus über fahrzeugsensitive Ansteuereinrichtungen aus Platzgründen nicht möglich ist. Mit relativ geringem Aufwand kann durch eine zusätzliche Lehnenschloßklinke ein weiteres Funktionsmerkmal des Gurtaufrollers verwirklicht werden.

Eine weiterbildende Maßnahme besteht auch darin, auf dem Steuerhebel weiterhin eine fahrzeugsensitiv in die Verzahnung der Kupplungsscheibe einsteuerbare Zwischenklinke vorzusehen. Eine separate Zwischenklinke erleichtert die Anordnung des fahrzeugsensitiven Sensors und dessen Ausgestaltung. Auch kann die Zwischenklinke von einem nachführbaren Sensor oder einem auf zwei Fahrzeugrichtungen ansprechenden Sensor betätigt werden. Es kann damit auch ein Kindersicherungspin vorgesehen werden, der die Zwischenklinke in die Verzahnung der Kupplungsscheibe einsteuert.

Als weiterbildende Maßnahme ist eine Druckfeder vorgesehen, durch die der Stößel in Richtung der Position vorgespannt ist, in der er die Lehnenschloßklinke für den Eingriff mit der Verzahnung der Kupplungsscheibe freigibt. Hierdurch wird der Blockiermechanismus beispielsweise auch dann aktiviert, wenn der Kabelzug, der das Schloß mit dem Stößel verbindet, bricht. Bei einem Bruch des Kabelzugs kann dann kein Gurtband mehr abgezogen werden.

Es ist ebenfalls vorteilhaft, wenn der Kabelzug mit einer Umhüllung versehen ist, deren zur Befestigung am Rahmen des Gurtaufrollers vorgesehenes Endstück die Druckfeder und einen mit der Druckfeder zusammenwirkenden Anschlag des Stößels aufweist. Eine solche Maßnahme ermöglicht die vollständige Vormontage des Gurtaufrollers und einen nachträglichen Anschluß des Kabelzugs an die fertig montierte Baugruppe.

Weiterhin ist es von Vorteil, daß der Stößel in einer Längsbohrung einer am Rahmen befestigten Sensorplatte geführt ist. Ohne zusätzliche Bauteile ist damit eine zuverlässige Führung des Stößels gewährleistet.

Es ist ebenfalls vorgesehen, daß die Kupplungsscheibe eine weitere Verzahnung und die Lehnenschloßklinke einen ersten und einen zweiten Steueransatz aufweist, wobei der erste Steueransatz bei einer Drehung der Gurtspule in der Gurtbandabwickelrichtung in die Verzahnung und der zweite Steueransatz bei einer Drehung der Gurtspule in der Gurtbandaufwickelrichtung in die weitere Verzahnung einsteuerbar ist. Hierdurch kann auch das Aufwickeln von Gurtband während des Klappvorgangs der Rückenlehne verhindert werden.

Schließlich ist es vorteilhaft, daß die Verzahnung und die weitere Verzahnung auf der Kupplungsscheibe axial zueinander versetzt sind. Durch diese Maßnahme wird eine gegenseitige Behinderung von erstem Steueransatz und weiterer Verzahnung bzw. zweitem Steueransatz und Verzahnung vermieden.

Weitere Merkmale und Vorteile der Erfindung ergeben sich aus der folgenden Beschreibung der bevorzugten Ausführungsformen der Erfindung und aus der Zeichnung, auf die Bezug genommen wird. In der Zeichnung zeigen:
Figur 1 eine schematische Darstellung eines Fahrzeugsitzes mit einem erfindungsgemäßen Gurtaufroller,
Figur 2 eine Seitenansicht einer ersten Ausführungsform des erfindungsgemäßen Gurtaufrollers in teilweise geschnittener Darstellung bei eingerasteter Rückenlehne,
Figur 3 den Gurtaufroller der Figur 2 bei nicht eingerasteter Rückenlehne,
Figur 4 eine perspektivische Seitenansicht von Teilen des Gurtaufrollers zur Veranschaulichung der Funktion,
Figur 5 eine Seitenansicht einer weiteren Ausführungsform des erfindungsgemäßen Gurtaufrollers in teilweise geschnittener Darstellung bei eingerasteter Rückenlehne, und
Figur 6 den Gurtaufroller der Figur 5 bei nicht eingerasteter Rückenlehne.

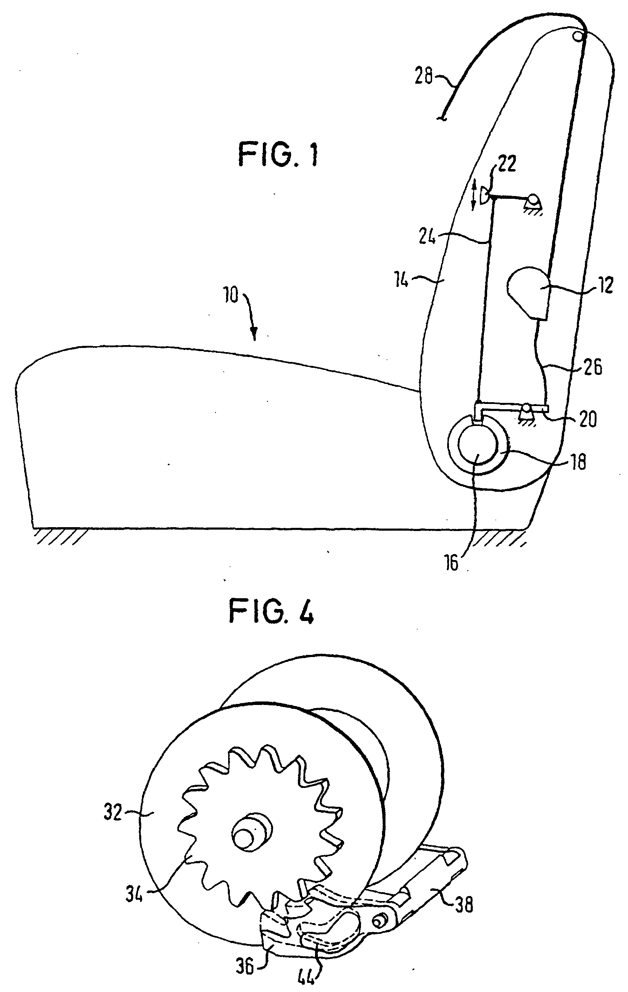

Die schematische Darstellung der Figur 1 zeigt einen Fahrzeugsitz 10 mit einem erfindungsgemäßen Gurtaufroller 12. Der Gurtaufroller 12 ist in der Rückenlehne 14 des Fahrzeugsitzes 10 angeordnet, die über ein Drehgelenk 16 mit dem Sitzteil und damit dem Fahrzeugaufbau verbunden ist. Die Rückenlehne 14 kann um das Drehgelenk 16 geklappt werden und wird in ihrer in der Figur 1 dargestellten aufrechten Gebrauchsposition durch ein Schloß verriegelt. Das Schloß ist schematisch durch eine Scheibe 18, die konzentrisch um das Drehgelenk 16 angeordnet ist und fest mit dem Sitzteil verbunden ist, und ein bewegliches Funktionsteil, eine Schloßfalle 20, angedeutet. Die Scheibe 18 weist eine Ausnehmung auf, in die die an der Rückenlehne 14 schwenkbar gelagerte Schloßfalle 20 eingreift. Die Rückenlehne 14 kann entriegelt und nachfolgend umgeklappt werden, indem die Schloßfalle 20 aus der Ausnehmung der Scheibe 18 herausbewegt wird. Dies erfolgt durch einen Entriegelungshebel 22, der mit der Schloßfalle über einen Kabelzug 24 in Verbindung steht. Die Schloßfalle 20 ist als zweiseitiger Hebel ausgebildet, an dessen einem Ende der Kabelzug 24 angreift und an dessen anderem Ende ein Kabelzug 26 angreift, der mit dem Gurtaufroller 12 in Verbindung steht. Wird die Schloßfalle 20 durch eine Aufwärtsbewegung des Entriegelungshebels 22 aus der Ausnehmung der Scheibe 18 bewegt, wird gleichzeitig durch den Kabelzug 26 der Blockiermechanismus des Gurtaufrollers 12 aktiviert. Wenn sich die Schloßfalle 20 nicht in der Ausnehmung der Scheibe 18 befindet, kann somit kein Gurtband 28 vom Gurtaufroller 12 abgezogen werden.

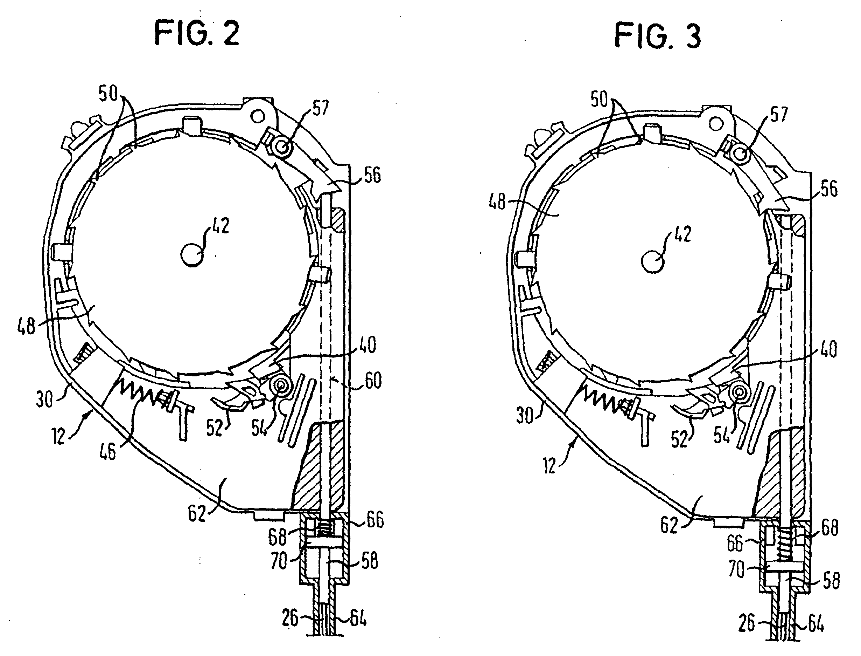

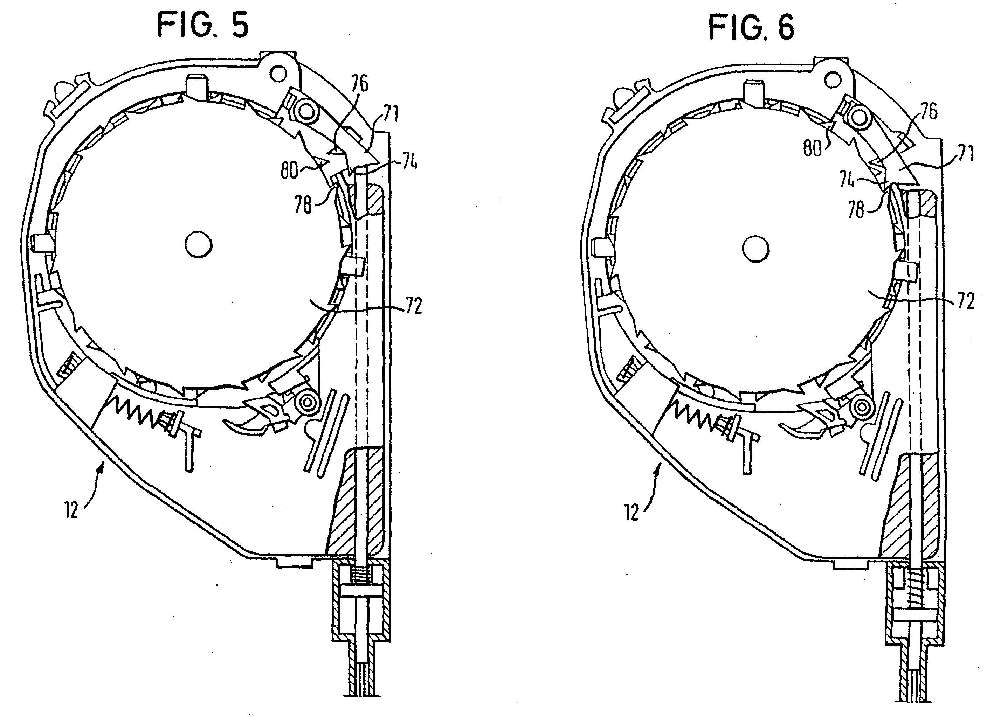

Die Seitenansicht der Figur 2 zeigt den Gurtaufroller 12 detaillierter. Zum Zweck einer besseren Darstellung ist eine seitliche Abdeckhaube abgenommen und der Gurtaufroller 12 teilweise geschnitten dargestellt. Der Gurtaufroller 12 weist einen Rahmen 30 auf, in dem eine, in der Figur 4 dargestellte, Gurtspule 32 drehbar gelagert ist. Die Gurtspule 32 weist an jedem ihrer seitlichen Flansche eine Sperrverzahnung 34 auf, in die jeweils eine Sperrklinke 36 eingreifen kann. Die Sperrklinken 36 sind, wie in der Figur 4 zu erkennen ist, durch einen Steg 38 miteinander verbunden, und sie sind am Rahmen 30 des Gurtaufrollers 12 schwenkbar gelagert. Um die Sperrklinken 36 in die Sperrverzahnung 34 einzusteuern, ist ein Steuerhebel 40 vorgesehen, der um die Achse 42 der Gurtspule 32 drehbar gelagert ist. Wird der Steuerhebel 40 in der Figur 2 entgegen dem Uhrzeigersinn verdreht, greift ein Vorsprung des Steuerhebels 40 in die Ausnehmung 44 der Sperrklinke 36 ein und steuert diese damit in die Sperrverzahnung 34 ein. Die Drehbewegung des Steuerhebels 40 wird wiederum durch eine drehfest mit der Gurtspule 32 verbundene Kupplungsscheibe 48 verursacht, die an ihrem äußeren Umfang eine Verzahnung 50 aufweist. In diese Verzahnung 50 kann eine auf dem Steuerhebel 40 schwenkbar gelagerte Zwischenklinke 52 eingesteuert werden, die auf dem Steuerhebel 40 über ein Drehgelenk 54 gelagert ist. Die Zwischenklinke 52 wird durch einen nicht dargestellten, konventionellen Kugelsensor betätigt. Überschreitet die Fahrzeugbeschleunigung einen vorbestimmten Wert, verschiebt der Kugelsensor die Zwischenklinke 52 in der Figur 2 nach oben, wodurch diese in die Verzahnung 50 eingreift. Erfolgt gleichzeitig eine Drehung der Gurtspule 32 und damit der Kupplungsscheibe 48 entgegen dem Uhrzeigersinn in der Figur 2, führt der Steuerhebel 40 ebenfalls eine Drehbewegung entgegen dem Uhrzeigersinn aus. Hierdurch werden die Sperrklinken 36 in die Sperrverzahnungen 34 eingesteuert, und die Gurtspule ist blockiert. Die Blockierung der Gurtspule kann auch durch eine konventionelle, gurtbandsensitive Ansteuerungseinrichtung eingeleitet werden, die in den Figuren nicht dargestellt ist.

Eine Drehbewegung des Steuerhebels 40, die zu einer Blockierung des Gurtaufrollers 12 führt, kann ebenfalls durch eine Lehnenschloßklinke 56 verursacht werden, die über ein Drehgelenk 57 ebenfalls schwenkbar an dem Steuerhebel 40 gelagert ist. In dem in der Figur 2 gezeigten Zustand mit eingerasteter Rückenlehne wird die Lehnenschloßklinke 56 von einem Stößel 58 gehalten, so daß die Lehnenschloßklinke 56 nicht in die Verzahnung 50 der Kupplungsscheibe 48 eingreifen kann. Der Stößel 58 ist in einer Längsbohrung 60 einer Sensorplatte 62 längs verschiebbar gelagert. Die Sensorplatte 62 ist wiederum mit dem Rahmen 30 des Gurtaufrollers 12 fest verbunden. Der Stößel 58 ist am Ende des Schiebe-Kabelzugs 26 angeordnet, der mit der in der Figur 1 gezeigten Schloßfalle 20 in Verbindung steht. Der Kabelzug 26 weist eine Umhüllung 64 auf, die wiederum mit einem Endstück 66 versehen ist, das am Rahmen 30 befestigt ist. Innerhalb des Endstücks 66 ist eine Druckfeder 68 angeordnet, die mit einem Anschlag 70 des Stößels 58 zusammenwirkt und diesen in Richtung der Position vorspannt, in der der Stößel 58 die Lehnenschloßklinke 56 freigibt und damit die Blockierung des Gurtaufrollers 12 verursacht.

Ein solcher Zustand ist in der Ansicht der Figur 3 dargestellt. Der Stößel 58 ist durch eine Bewegung des Entriegelungshebels 22 über den Schiebe-Kabelzug 26 nach unten bewegt worden, so daß sein oberes Ende die Lehnenschloßklinke 56 freigibt. Die in der Figur 3 dargestellte Position des Stößels 58 kann bei einem Bruch des Kabelzugs 26 ebenfalls durch die Wirkung der Druckfeder 68 erreicht werden. Die freigegebene Lehnenschloßklinke 56 schwenkt aufgrund ihres Eigengewichts im Uhrzeigersinn und kommt damit in Eingriff mit der Verzahnung 50 der Kupplungsscheibe 48. In der Folge führt dies zu einer Drehung des Steuerhebels 40 und damit zu einer Blockierung des Gurtaufrollers 12 über die in der Figur 4 dargestellten Sperrklinken 36 und Sperrverzahnungen 34. Bei entriegeltem Lehnenschloß kann somit kein Gurtband abgezogen werden. Wird dagegen die Rückenlehne des Sitzes wieder in ihre aufrechte Gebrauchsposition bewegt, kann das Lehnenschloß einrasten und der Stößel 58 wird über den Kabelzug 26 in seine obere Position verschoben, die in der Figur 2 dargestellt ist. Dabei muß die relativ kleine Kraft der Druckfeder 68 überwunden werden. Die Lehnenschloßklinke 56 gibt damit die Verzahnung 50 wieder frei und es kann wieder Gurtband vom Gurtaufroller 12 abgezogen werden. In dieser, in der Figur 2 gezeigten Position des Stößels 58 und der Lehnenschloßklinke 56 kann die Blockierung der Gurtspule 32 über ein Einsteuern der Sperrklinken 36 nur durch das fahrzeugsensitive und gurtbandsensitive Ansteuerungssystem verursacht werden.

Der in der Figur 5 und der Figur 6 dargestellte Gurtaufroller 12 einer zweiten Ausführungsform der Erfindung ist im wesentlichen baugleich mit dem in der Figur 2 und 3 dargestellten Gurtaufroller. Um auch das Aufwickeln von Gurtband bei entriegelter Rückenlehne zu verhindern sind jedoch eine gegenüber der ersten Ausführungsform abweichende Lehnenschloßklinke 71 und eine abweichende Kupplungsscheibe 72 vorgesehen. Die Lehnenschloßklinke 71 ist mit einem ersten Steueransatz 74 und einem zweiten Steueransatz 76 versehen, und die Kupplungsscheibe 72 weist eine erste Verzahnung 78 und eine zweite Verzahnung 80 auf. Die erste Verzahnung 78 ist dabei wie die in den Fig. 2 und 3 dargestellte Verzahnung 50 ausgebildet, so daß der erste Steueransatz 74 bei einer Drehung der Gurtspule in der Gurtbandabwickelrichtung in sie eingesteuert werden kann und dadurch diese Drehung sperrt. In die zweite Verzahnung 80 kann der zweite Steueransatz 76 bei einer Drehung der Gurtspule in Gurtbandaufwickelrichtung eingesteuert werden, wodurch dann diese Drehung gesperrt ist. Die Verzahnungen 78 und 80, wie auch die Steueransätze 74 und 76, sind dabei axial, d.h. in Richtung der Gurtspulenachse, zueinander versetzt. Auf diese Weise kann beim Einsteuern des ersten Steueransatzes 74 in die erste Verzahnung 78 und beim Einsteuern des zweiten Steueransatzes 76 in die zweite Verzahnung 80 keine Behinderung durch die jeweils andere Verzahnung bzw. den jeweils anderen Steueransatz auftreten.

In der Darstellung der Figur 6 ist die Rückenlehne des Fahrzeugsitzes entriegelt, und der erste Steueransatz 74 der Lehnenschloßklinke 71 ist in die erste Verzahnung 78 der Kupplungsscheibe 72 eingesteuert. Somit kann kein Gurtband mehr von der Gurtspule abgezogen werden. Die Gurtspule kann sich jedoch auch in Aufwickelrichtung nur um einen geringen Winkel drehen, da bei einer solchen Drehung, in der Fig. 6 im Uhrzeigersinn, der zweite Steueransatz 76 in die zweite Verzahnung 80 eingreift und damit auch das Aufwickeln von Gurtband verhindert.

## Patentansprüche

1. Gurtaufroller (12) zum Einbau in eine umlegbare Rückenlehne (14), die am Fahrzeugaufbau in aufrechter Gebrauchsposition durch ein Schloß (18, 20) verriegelbar ist, mit einer in einem Rahmen (30) drehbar gelagerten Gurtspule (32) und einem Blockiermechanismus (34, 36) zur selektiven, drehfesten Blockierung der Gurtspule (32) am Rahmen (30), wobei der Blockiermechanismus (34, 36) aktiviert ist, solange die Rückenlehne (14) nicht durch Einrasten des Schlosses (18, 20) verriegelt ist, **dadurch gekennzeichnet, daß** der Blockiermechanismus eine an der Gurtspule (32) angeordnete Sperrverzahnung (34), wenigstens eine in die Sperrverzahnung (34) einsteuerbare Sperrklinke (36), einen Steuerhebel (40) zur Einsteuerung der Sperrklinke (36) in die Sperrverzahnung (34), eine mit der Gurtspule (32) verbundene Kupplungsscheibe (48) mit einer Verzahnung (50), eine auf dem Steuerhebel (40) angeordnete Lehnenschloßklinke (56), die in die Verzahnung (50) der Kupplungsscheibe (48) einsteuerbar ist, und einen Stößel (58) enthält, der mit dem Schloß (18, 20) durch einen Kabelzug (26) gekoppelt ist und auf die Lehnenschloßklinke (56) einwirkt.

2. Gurtaufroller nach Anspruch 1, **dadurch gekennzeichnet, daß** der Blockiermechanismus (34, 36) eine Ansteuereinrichtung (40, 48, 56) und ein dieser zugeordnetes Betätigungselement (58) aufweist, das durch ein Schub- oder Zugmittel (26) mit dem Schloß (18, 20) gekoppelt ist.

3. Gurtaufroller nach Anspruch 1 oder 2, **dadurch gekennzeichnet, daß** auf dem Steuerhebel (40) weiterhin eine fahrzeugsensitiv in die Verzahnung (50) der Kupplungsscheibe (48) einsteuerbare Zwischenklinke (52) vorgesehen ist.

4. Gurtaufroller nach einem der vorhergehenden Ansprüche, **dadurch gekennzeichnet, daß** eine Druckfeder (68) vorgesehen ist, durch die der Stößel (58) in Richtung der Position vorgespannt ist, in der er die Lehnenschloßklinke (56) für den Eingriff mit der Verzahnung (50) der Kupplungsscheibe (48) freigibt.

5. Gurtaufroller nach Anspruch 4, **dadurch gekennzeichnet, daß** der Kabelzug (26) mit einer Umhüllung (64) versehen ist, deren zur Befestigung am Rahmen (30) des Gurtaufrollers (12) vorgesehenes Endstück (66) die Druckfeder (68) und einen mit der Druckfeder (68) zusammenwirkenden Anschlag (70) des Stößels (58) aufnimmt.

6. Gurtaufroller nach einem der vorhergehenden Ansprüche, **dadurch gekennzeichnet, daß** der Stößel (58) in einer Längsbohrung (60) einer am Rahmen (30) befestigten Sensorplatte (62) geführt ist.

7. Gurtaufroller nach einem der vorhergehenden Ansprüche, **dadurch gekennzeichnet, daß** die Kupplungsscheibe (72) eine weitere Verzahnung (80) und die Lehnenschloßklinke (71) einen ersten (74) und einen zweiten Steueransatz (76) aufweist, wobei der erste Steueransatz (74) bei einer Drehung der Gurtspule in der Gurtbandabwickelrichtung in die Verzahnung (78) und der zweite Steueransatz (76) bei einer Drehung der Gurtspule in der Gurtbandaufwickelrichtung in die weitere Verzahnung (80) einsteuerbar ist.

8. Gurtaufroller nach Anspruch 7, **dadurch gekennzeichnet, daß** die Verzahnung (78) und die weitere Verzahnung (80) auf der Kupplungsscheibe (72) axial zueinander versetzt sind.

## Claims

1. A belt retractor (12) for installation in a fold-down type backrest (14) which can be latched to the vehicle body in the upright seating position by a lock (18, 20), comprising a belt reel (32) rotatably mounted in a frame (30) and a blocking mechanism (34, 36) for selectively blocking rotation of the belt reel (32) on the frame (30), the blocking mechanism (34, 36) being activated as long as the backrest (14) is not locked in place by latching action of the lock (18, 20), **characterized in that** the blocking mechanism includes a ratchet toothing (34) arranged on the belt reel (32), at least one ratchet pawl (36) which can be caused to engage the ratchet toothing (34), a control lever (40) for causing engagement of the ratchet pawl (36) with the ratchet toothing (34), a coupling disk (48) connected to the belt reel (32) and having a toothing (50), a backrest lock pawl (56) which is arranged on the control lever (40) and can be caused to engage the toothing (50) of the coupling disk (48), and an actuating finger (58) coupled to the lock (18, 20) by a cable pull (26) and acting on the backrest lock pawl (56).

2. The belt retractor as set forth in claim 1, **characterized in that** the blocking mechanism (34, 36) comprises an activating means (40, 48, 56) and an actuating element (58) associated therewith and coupled to the lock (18, 20) by a push means or a pull means (26).

3. The belt retractor as set forth in claim 1 or 2, **characterized in that** the control lever (40) has further provided thereon an intermediate pawl (52) which can be caused to engage the toothing (50) of the coupling disk (48) in a vehicle-sensitive manner.

4. The belt retractor as set forth in any of the preceding claims, **characterized in that** a compression spring (68) is provided by which the actuating finger (58) is pretensioned towards the position in which it releases the backrest lock pawl (56) for engagement with the toothing (50) of the coupling disk (48).

5. The belt retractor as set forth in claim 4, **characterized in that** the cable pull (26) is provided with a sleeve (64), the end piece (66) of which provided for attachment to the frame (30) of the belt retractor (12) mounts the compression spring (68) and a stop (70) of the actuating finger (58) cooperating with the compression spring (68).

6. The belt retractor as set forth in any of the preceding claims, **characterized in that** the actuating finger (58) is guided in a longitudinal bore (60) of a sensor plate (62) secured to the frame (30).

7. The belt retractor as set forth in any of the preceding claims, **characterized in that** the coupling disk (72) comprises a further toothing (80) and the backrest lock pawl (71) comprises a first (74) and a second control knuckle (76), the first control knuckle (74) being adapted to be caused to engage the toothing (78) on rotation of the belt reel in the belt unwinding direction and the second control knuckle (76) being adapted to be caused to engage the further toothing (80) on rotation of the belt reel in the belt wind-up direction.

8. The belt retractor as set forth in claim 7, **characterized in that** the toothing (78) and the further toothing (80) are axially offset relative to each other on the coupling disk (72).

## Revendications

1. Enrouleur de ceinture (12) destiné à être monté dans un dossier (14) rabattable qui, en position d'utilisation redressée, peut être verrouillé par une serrure (18, 20) sur la carrosserie du véhicule comportant une bobine de ceinture (32) montée rotative dans un cadre (30) et un mécanisme de blocage (34, 36) pour bloquer la bobine de ceinture (32) sur le cadre (30) de manière sélective et solidaire en rotation, le mécanisme de blocage (34, 35) étant activé tant que le dossier (14) n'est pas verrouillé par enclenchement de la serrure (18, 20), **caractérisé en ce que** le mécanisme de blocage contient une denture d'arrêt (34) agencée sur la bobine de ceinture (32), au moins un cliquet d'arrêt (36) susceptible d'être engagé dans la denture d'arrêt (34), un levier de commande (40) pour engager le cliquet d'arrêt (36) dans la denture d'arrêt (34), un disque d'engrenage (48) relié à la bobine de ceinture (3) avec une denture (50), un cliquet de serrure de dossier (56) agencé sur le levier de commande (40), et un poussoir (58) qui est accouplé à la serrure (18, 20) par un câble (26) et qui agit sur le cliquet de serrure de dossier (56).

2. Enrouleur de ceinture selon la revendication 1, **caractérisé en ce que** le mécanisme de blocage (34, 36) présente un dispositif de pilotage (40, 48, 56) et un élément d'actionnement (58) associé à celui-ci, qui est accouplé à la serrure (18, 20) par un moyen de poussée ou de traction (26).

3. Enrouleur de ceinture selon la revendication 1 ou 2, **caractérisé en ce qu'**il est en outre prévu sur le levier de commande (40) un cliquet intermédiaire (52) sensible aux mouvements du véhicule, qui peut s'engager dans la denture (50) du disque d'engrenage (48).

4. Enrouleur de ceinture selon l'une des revendications précédentes, **caractérisé en ce qu'**il est prévu un ressort de compression (68) par lequel le poussoir (58) est précontraint en direction de la position dans laquelle il libère le cliquet de serrure de dossier (56) pour l'engagement avec la denture (50) du disque d'engrenage (48).

5. Enrouleur de ceinture selon la revendication 5, **caractérisé en ce que** le câble (26) est pourvu d'une gaine (64) dont sa portion d'extrémité (66) prévue pour la fixation sur le cadre (30) de l'enrouleur de ceinture (12) reçoit le ressort de compression (68) et une butée (70) du poussoir (58) coopérant avec le ressort de compression (68).

6. Enrouleur de ceinture selon l'une des revendications précédentes, **caractérisé en ce que** le poussoir (58) est guidé dans un perçage longitudinal (60) d'une plaque de détecteur (62) fixée sur le cadre (30).

7. Enrouleur de ceinture selon l'une des revendications précédentes, **caractérisé en ce que** le disque d'engrenage (72) présente une autre denture (80) et le cliquet de serrure de dossier (71) présente un premier téton de commande (74) et un deuxième téton de commande 76), le premier téton de commande (74) pouvant s'engager dans la denture (78) en cas de rotation de la bobine de ceinture en direction de déroulement de la bande de ceinture, et le deuxième téton de commande (76) pouvant s'engager dans l'autre denture (80) en cas de rotation de la bobine de ceinture en direction d'enroulement de la bande de ceinture.

8. Enrouleur de ceinture selon la revendication 7, **caractérisé en ce que** la denture (78) et l'autre denture (80) décalées l'une par rapport à l'autre axialement sur le disque d'engrenage (72).
